# FASCICULE DE BREVET EUROPEEN

(11) **EP 3 167 322 B1**
(45) Date de publication et mention de la délivrance du brevet: **08.06.2022**
(21) Numéro de dépôt: 15733733.8
(22) Date de dépôt: 01.07.2015
(51) Int. Cl.: G02B 6/44

(54) **RACCORD D'EXTREMITE POUR CIRCUIT DE FIBRES OPTIQUES, PROCEDE DE CONNEXION D'UN TEL CIRCUIT A UN TEL RACCORD, ET ELEMENT D'ETANCHEITE CORRESPONDANT**
ENDKUPPLUNG FÜR EINE FASEROPTISCHE SCHALTUNG, VERFAHREN ZUM ANSCHLUSS SOLCH EINER SCHALTUNG AN EINE DERARTIGE KUPPLUNG UND ENTSPRECHENDES DICHTELEMENT
END COUPLING FOR A FIBRE OPTIC CIRCUIT, METHOD FOR CONNECTING SUCH A CIRCUIT TO SUCH A COUPLING AND CORRESPONDING SEALING ELEMENT

(30) Priorité: 11.07.2014 FR 1456748
(43) Date de publication de la demande: 17.05.2017
(73) Titulaire: Parker Hannifin Manufacturing France SAS, 74112 Annemasse (FR)
(72) Inventeur: LE QUERE, Philippe, F-35830 Betton (FR)
(74) Mandataire: Lavialle, Bruno François Stéphane
(86) Numéro de dépôt international: PCT/EP2015/065041
(87) Numéro de publication internationale: WO 2016/005254

(56) Documents cités:
- FR-A1- 2 982 039
- JP-A- 2007 198 417
- US-A- 4 239 245

## Description

### DOMAINE DE L'INVENTION

La présente invention concerne un raccord d'extrémité pour circuit de fibres optiques et un procédé de connexion d'un tel circuit à un tel raccord.

### ETAT DE LA TECHNIQUE

Un circuit de fibres optiques comporte généralement des tubes qui sont reliés les uns aux autres par des raccords et dans lesquels s'étend un câble optique constitué d'un faisceau de fibres optiques. L'ensemble des tubes et raccords assure une protection mécanique du câble optique et facilite l'installation du câble optique, le câble optique étant généralement introduit dans le circuit après l'installation de celui-ci et propulsé le long de celui-ci par de l'air sous pression.

Les raccords comprennent des raccords intermédiaires et des raccords d'extrémité qui, comme leur nom l'indique, sont montés respectivement entre les extrémités et aux extrémités du circuit.

Chaque raccord intermédiaire est formé d'un corps tubulaire délimitant un canal ayant deux tronçons d'extrémité opposés de réception d'une extrémité de tube. Ces tronçons de réception sont pourvus d'un organe d'accrochage du tube et d'un élément annulaire d'étanchéité agencé pour assurer un contact étanche entre le tube et une paroi du tronçon de réception. Le corps tubulaire est en outre agencé pour autoriser le libre passage du câble optique lors de sa mise en place dans le circuit.

Chaque raccord d'extrémité comprend un corps tubulaire délimitant un canal étagé ayant un tronçon d'entrée ou de réception d'une portion d'extrémité du tube et un tronçon de sortie du câble optique. Le tronçon de réception est pourvu d'un organe d'accrochage du tube et d'un élément annulaire d'étanchéité principal monté dans un logement terminal du tronçon de réception s'étendant en aval de l'organe d'accrochage par référence à un sens d'introduction du tube dans le canal. Comme les circuits de fibres optiques sont reçus dans des gaines techniques contenant également des conduites d'eau et des conduites de gaz, il est nécessaire d'empêcher qu'une fuite de gaz ou d'eau puisse se propager jusque dans les locaux de l'utilisateur final ou dans les locaux techniques de l'opérateur de télécommunications, locaux qui sont réservés à la distribution des fibres optiques. Telle est la fonction de l'élément d'étanchéité principal qui est agencé pour assurer un contact étanche entre, d'une part, le câble optique et au moins une paroi du logement terminal, et, d'autre part, le tube et le corps du raccord.

Les raccords d'extrémités dont l'étanchéité est devenue défaillante suite à un écrasement accidentel, un choc mécanique ou thermique doivent être changés. Les raccords d'extrémités étant montés avant le passage du câble optique, celui-ci est généralement connecté en amont et en aval du raccord endommagé. La dépose d'un raccord endommagé impose alors de découper celui-ci pour pouvoir effectuer son retrait. De plus la pose d'un nouveau raccord impose de débrancher l'extrémité des fibres optiques du câble optique afin d'enfiler le nouveau raccord d'extrémité sur le câble et réaliser la jonction entre le câble optique et le tube. Les opérations de déconnexion/reconnexion de l'extrémité d'un câble optique requièrent une main d'œuvre qualifiée, sont sources d'erreur et peuvent endommager le câble optique lui-même.

Il a été envisagé d'utiliser des joints tubulaires pourvus d'une fente longitudinale, et insérés dans le tube. Cependant, ceci oblige à disposer d'un joint spécifique à chaque diamètre de câble optique ainsi qu'à chaque diamètre de tube. De plus, la fente longitudinale ne garantit pas un niveau d'étanchéité satisfaisant et durable.

Il arrive en outre qu'on s'aperçoive de l'omission d'un raccord d'extrémité alors même que l'extrémité des fibres optiques du câble optique ont été raccordées. La mise en place de ce raccord d'extrémité impose alors la déconnexion de chacune des fibres optiques du câble optique.

### OBJET DE L'INVENTION

Un but de l'invention est de réduire les temps et le matériel requis pour effectuer des opérations de remplacement d'un raccord d'extrémité défectueux.

### EXPOSE DE L'INVENTION

A cet effet, on prévoit un raccord d'extrémité pour circuit de fibres optiques comportant au moins un tube dans lequel s'étend un câble optique selon un axe longitudinal. Le raccord comprend un corps tubulaire délimitant un canal ayant un tronçon de réception d'une portion d'extrémité du tube et une extrémité de sortie du câble optique. Le tronçon de réception est pourvu de moyens d'accrochage du tube et d'un élément d'étanchéité agencé pour assurer un contact étanche, d'une part, entre le câble optique et une paroi d'un logement terminal du tronçon de réception et, d'autre part, entre le tube et le corps tubulaire. Selon l'invention, le corps tubulaire est agencé pour pouvoir présenter au moins une ouverture longitudinale qui sépare le corps tubulaire en une première coquille et une deuxième coquille afin de faire passer le câble optique au travers de l'ouverture longitudinale pour l'amener dans le canal et en ce que l'élément d'étanchéité s'étend en hélice autour de l'axe longitudinal pour pouvoir être monté sur le câble optique sans qu'il soit nécessaire de débrancher une extrémité du câble, et en ce que les moyens d'accrochage comprennent un filet hélicoïdal présentant une arête vive placée sur une face interne du tronçon de réception.

Ainsi, le raccord peut accueillir le câble optique par insertion longitudinale et l'élément d'étanchéité peut être monté sur le câble optique sans qu'il soit nécessaire d'en débrancher une extrémité. Le remplacement d'un tel raccord en cas de défaillance se fait sans utilisation d'outils tranchants susceptibles d'endommager le câble.

Selon un mode de réalisation particulier, les spires d'extrémités de l'élément d'étanchéité présentent une surface s'étendant dans un plan sensiblement perpendiculaire à l'axe longitudinal. Cette géométrie permet d'assurer une étanchéité fiable avec la portion d'extrémité du tube qui vient en contact avec la spire d'extrémité de l'élément d'étanchéité.

Préférentiellement, le sens d'enroulement du filet hélicoïdal est contraire au sens d'enroulement de l'élément d'étanchéité. Ceci permet d'accroître le serrage des spires de l'élément d'étanchéité entre elles lors du vissage du tube dans le raccord grâce à la friction de la portion d'extrémité du tube contre une spire d'extrémité de l'élément d'étanchéité.

L'invention concerne également un procédé de connexion à un raccord du type précité, d'un circuit de fibres optiques comportant au moins un tube dans lequel s'étend un câble optique selon un axe longitudinal. Le raccord comprend un corps tubulaire délimitant un canal ayant un tronçon de réception d'une portion d'extrémité du tube et un tronçon de sortie du câble optique. Le tronçon de réception est pourvu de moyens d'accrochage du tube et d'un élément d'étanchéité agencé pour assurer un contact étanche, d'une part, entre le câble optique et une paroi d'un logement terminal du tronçon de réception et, d'autre part, entre le tube et le corps tubulaire. Le corps tubulaire est agencé pour pouvoir présenter au moins une ouverture longitudinale qui sépare le corps tubulaire en une première coquille et une deuxième coquille afin de faire passer le câble optique au travers de l'ouverture longitudinale pour l'amener dans le canal et l'élément d'étanchéité s'étendant en hélice autour de l'axe longitudinal pour pouvoir être monté sur le câble optique sans qu'il soit nécessaire de débrancher une extrémité du câble, dans lequel les moyens d'accrochage comprennent un filet hélicoïdal présentant une arête vive placée sur une face interne du tronçon de réception. Le procédé selon l'invention comprend les étapes de :
- dérouler l'élément d'étanchéité et l'enrouler sur une portion du câble optique située face à une portion d'extrémité du tube ;
- monter le corps tubulaire autour de la portion du câble optique sur laquelle est enroulée l'élément d'étanchéité en faisant passer le câble optique par l'ouverture longitudinale ;
- introduire la portion d'extrémité du tube dans le tronçon de réception jusqu'à déplacer l'élément d'étanchéité dans le logement terminal ;
- poursuivre l'introduction de la portion d'extrémité du tube jusqu'à comprimer axialement l'élément d'étanchéité contre la paroi du logement terminal.

### BREVE DESCRIPTION DES FIGURES

Il sera fait référence aux dessins annexés, parmi lesquels :
- la figure 1 est une vue schématique en coupe longitudinale d'un raccord selon l'invention avant insertion du câble optique ;
- la figure 2 est une vue schématique en coupe transversale selon le plan II-II du raccord de la figure 1 ;
- la figure 3 est une vue schématique éclatée, en perspective, du raccord de la figure 1 ;
- la figure 4 est une vue de détail en perspective de l'élément d'étanchéité du raccord de la figure 1 ;
- la figure 5 est une vue de côté de l'élément d'étanchéité de la figure 4 ;
- la figure 6 est une vue en coupe longitudinale de l'élément d'étanchéité de la figure 4 ;
- les figures 7 à 12 sont des représentations schématiques en perspective des différentes étapes du procédé de connexion selon l'invention ;
- les figures 13 et 14 sont des représentations schématiques en coupe des étapes finales de raccordement du procédé de connexion selon l'invention en application à un câble optique de relativement fort diamètre ;
- les figures 15 et 16 sont des représentations schématiques en coupe des étapes finales de raccordement du procédé de connexion selon l'invention en application à un câble optique de relativement faible diamètre.

### DESCRIPTION DETAILLEE DE MODES DE REALISATION DE L'INVENTION

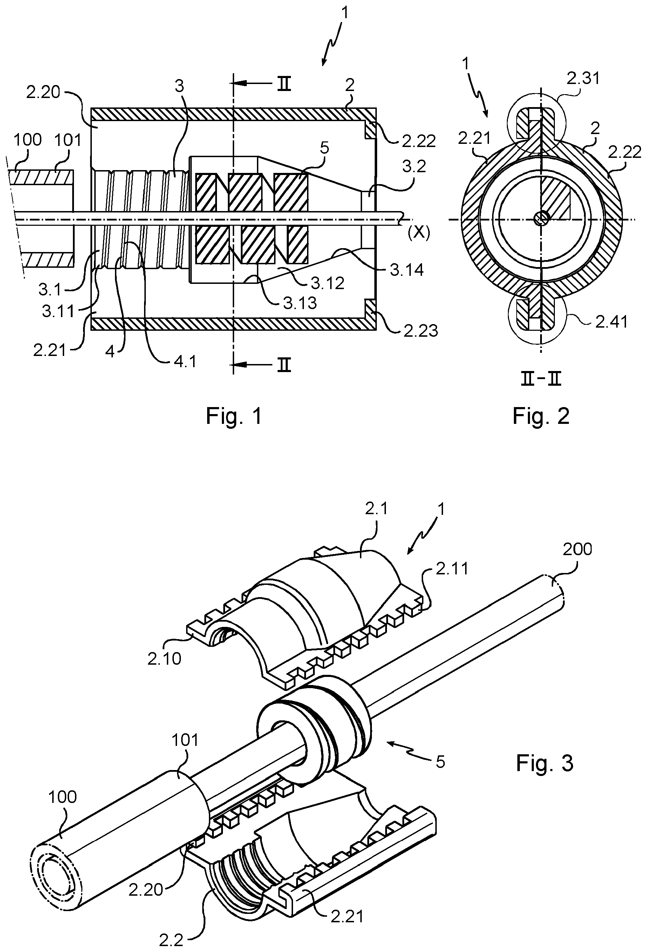

En référence aux figures 1 à 3, le raccord d'extrémité selon l'invention, généralement désigné 1, est destiné à la constitution d'un circuit de fibres optiques comportant des tubes 100 dans lesquels s'étend un câble optique 200 constitué d'un faisceau de fibres optiques.

Le raccord 1 comprend un corps 2, de forme tubulaire d'axe longitudinal X, délimitant un canal étagé 3 ayant un tronçon de réception 3.1 d'une portion d'extrémité 101 du tube 100 et une extrémité de sortie 3.2 du câble optique 200.

Le tronçon de réception 3.1 comporte un logement d'entrée 3.11 et un logement terminal 3.12 axialement successifs. Le logement d'entrée 3.11 comprend une portion cylindrique, de diamètre sensiblement égal à celui du tube 100, à l'intérieur de laquelle est réalisé un filet hélicoïdal 4 dont le sens d'enroulement est à droite et qui présente une arête vive 4.1 en saillie vers l'intérieur du logement d'entrée 3.11. Le logement terminal 3.12 comprend une portion cylindrique 3.13 de diamètre supérieur à celui du logement d'entrée 3.11 en communication avec une portion tronconique 3.14. En l'espèce, la portion tronconique a une base et une partie supérieure qui sont délimitées par un plan parallèle au plan de la base du cône.

Le corps tubulaire 2 est séparé selon un plan comprenant l'axe longitudinal X en une première coquille 2.1 et une deuxième coquille 2.2 (pour être plus précis, les coquilles 2.1, 2.2 sont des demi-coquilles). Les coquilles 2.1 et 2.2 ont une forme extérieure en demitube cylindrique. La coquille 2.1 comporte des bords longitudinaux crénelés formant deux séries 2.10-2.11 de huit languettes chacune et la coquille 2.2 comporte des bords longitudinaux recourbés également crénelés délimitant deux séries 2.20-2.21 de huit rainures qui forment respectivement des glissières 2.31 et 2.41 de réception des languettes 2.10-2.11. Les rainures 2.20 et 2.21 sont chacune fermées par les butées respectives 2.22 et 2.23 qui limitent le déplacement selon l'axe longitudinal de la première coquille 2.1 par rapport à la deuxième coquille 2.2. Lorsque les coquilles 2.1 et 2.2 sont séparées l'une de l'autre, il est formé entre elles une ouverture longitudinale permettant le passage du câble optique 200.

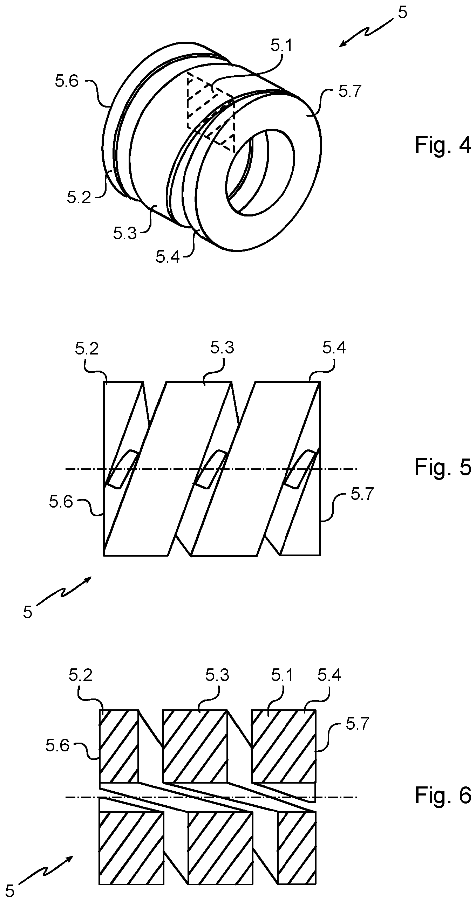

Un élément d'étanchéité 5 destiné à être monté sur le câble optique 200 et à être contenu dans le corps 2 est représenté en figure 4. Celui-ci se présente sous la forme d'un profilé ou boudin de section rectangulaire (petite section 5.1 représentée en figure 6) enroulé, selon un sens d'enroulement à gauche, en trois spires hélicoïdales disjointes successives 5.2, 5.3 et 5.4 autour d'un axe longitudinal pour former un élément tubulaire de grande section 5.5 circulaire (considérée selon un plan perpendiculaire à l'axe longitudinal d'enroulement des spires). Les spires d'extrémités 5.2 et 5.4 sont disjointes, c'est-à-dire qu'elles ne sont pas en contact avec les autres spires de l'élément d'étanchéité, et sont tronquées pour former des faces d'extrémité 5.6 et 5.7 planes s'étendant sensiblement perpendiculairement à l'axe longitudinal de l'élément d'étanchéité.

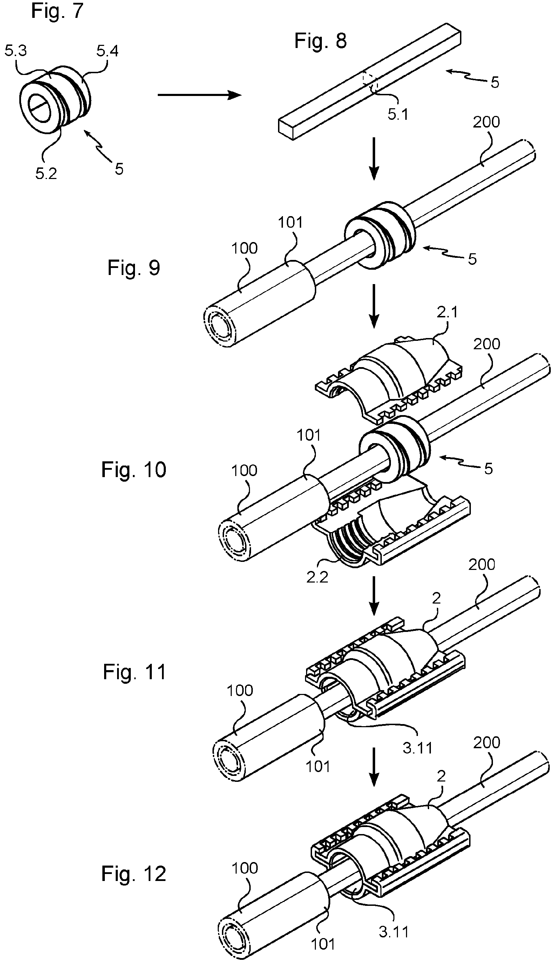

La connexion du raccord 1 à un tube 100 dans lequel s'étend un câble optique 200 d'un circuit de fibres optiques va maintenant être décrite en référence aux figures 7 à 15.

Les spires 5.2, 5.3 et 5.4 de l'élément d'étanchéité 4 sont déroulées (figures 7-8) et enroulées (figure 9) sur une portion du câble optique 200 située face à une portion d'extrémité 101 du tube 100.

Les coquilles 2.1 et 2.2 composant le corps tubulaire 2 sont séparées et présentées de part et d'autre de l'élément d'étanchéité 5 en faisant passer le câble, entre les coquilles 2.1, 2.2 écartées l'une de l'autre, au travers de l'une des ouvertures longitudinales ainsi créées (figure 10). Les coquilles 2.1 et 2.2 sont présentées de manière à ce que, une fois assemblées autour de l'élément d'étanchéité pour constituer le corps tubulaire 2, le logement d'entrée 3.11 du tronçon de réception 3.1 fasse face à la portion d'extrémité 101 du tube 100. Les languettes des séries de languettes 2.10 et 2.11 sont alors positionnées respectivement face aux espaces séparant les rainures des séries de rainures 2.20 et 2.21 (figure 11). Dans cette position, les coquilles 2.1 et 2.2 sont décalées longitudinalement l'une par rapport à l'autre d'une distance sensiblement égale à la largeur d'une ou plusieurs des languettes des séries 2.10-2.11. Dans cette configuration, et afin de rendre possible l'assemblage des glissières, le volume compris entre les portions des coquilles 2.1 et 2.2, et constitué des volumes délimités par les deux demi cylindres réalisant la portion cylindrique 3.13 décalés l'un par rapport à l'autre, doit pouvoir renfermer l'élément d'étanchéité 5. La portion cylindrique 3.13 est donc définie de manière à pouvoir accueillir l'élément d'étanchéité 5 dans sa configuration de fort diamètre lorsque les deux coquilles 2.1 et 2.2 sont présentées avec un décalage correspondant sensiblement à la largeur d'une ou plusieurs des languettes des séries 2.10-2.11. Les deux coquilles 2.1 et 2.2 sont alors rapprochées de manière à emboîter les languettes des séries 2.10-2.11 dans les séries de rainures homologues 2.20-2.21. La coquille 2.1 est alors déplacée longitudinalement relativement à la coquille 2.2 jusqu'à venue en butée contre les butées 2.22 et 2.23 (figure 12).

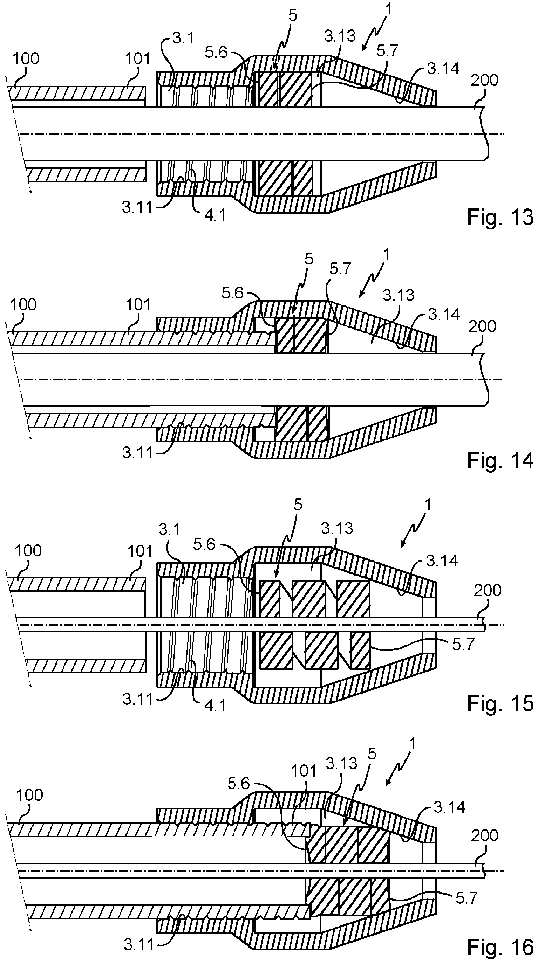

Selon le diamètre du câble optique 200, l'élément d'étanchéité 5 réalise un nombre plus ou moins grand de spires autour du câble 200. Les coupes des figures 12 et 13 représentent le comportement du raccord d'extrémité 1 monté autour d'un câble optique 200 de fort diamètre et les coupes des figures 14 et 15 représentent le comportement du raccord d'extrémité 1 monté autour d'un câble optique 200 de relativement faible diamètre.

La portion d'extrémité 101 du tube 100 est introduite dans le logement d'entrée 3.11 du tronçon de réception 3.1 et le tube 100 est vissé dans le logement d'entrée 3.11. L'arête vive 4.1 du filet hélicoïdal 4 pénètre dans la paroi extérieure tendre de la portion d'extrémité 101 du tube 100 et assure le maintien relatif du tube 100 et du corps tubulaire 2. Le vissage du tube 100 amène la portion d'extrémité 101 du tube 100 en contact avec la face d'extrémité 5.6 de l'élément d'étanchéité 5 et déplace l'élément d'étanchéité 5 dans le logement terminal 3.13.

Selon le diamètre du câble optique 200, la face d'extrémité 5.7 opposée à la face d'extrémité 5.6 vient en appui contre la partie de plus large diamètre de la portion tronconique 3.14 (figure 13) ou contre sa partie de plus faible diamètre (figure 15). Le tube 100 est introduit un peu plus loin dans le raccord 1 jusqu'à comprimer axialement l'élément d'étanchéité 5 contre la paroi de la portion tronconique 3.14 du logement terminal 3.13. Une fois l'élément d'étanchéité 5 comprimé, celui-ci assure un contact étanche entre le câble optique 200 et la paroi du logement terminal 3.13 au niveau de la surface tronconique de contact avec la face d'extrémité 5.7 (la surface tronconique applique l'élément d'étanchéité 5 contre le câble optique 200). La pression du tube 100 contre la surface d'extrémité 5.6 de l'élément d'étanchéité 5 assure en outre un contact étanche entre le tube 100 et le corps tubulaire 2.

Bien entendu, l'invention n'est pas limitée aux modes de réalisation décrits mais englobe toute variante entrant dans le champ de l'invention telle que définie par les revendications.

En particulier :
- bien qu'ici le corps tubulaire comprenne deux coquilles séparées, l'invention s'applique également à d'autres agencements pouvant présenter au moins une ouverture longitudinale de passage du câble optique comme par exemple une articulation de la première coquille sur la seconde ou un corps tubulaire cylindrique souple comportant une fente longitudinale ;
- bien qu'ici le tube soit accroché au raccord d'extrémité par un filet hélicoïdal, l'invention s'applique également à d'autres moyens d'accrochage du tube et du tronçon de connexion comme par exemple une bague dont la circonférence intérieure est dentée ou une portion présentant un profil en dents de sapin ;
- bien qu'ici l'élément d'étanchéité comprenne trois spires, l'invention s'applique également à un élément d'étanchéité comprenant deux spires ou plus de trois ;
- bien qu'ici toutes les spires de l'élément d'étanchéité soient disjointes, l'invention s'applique également à des spires dont seule la spire centrale est disjointe, voire dont toutes les spires sont jointes ;
- bien qu'ici le corps tubulaire soit séparé en deux coquilles, l'invention s'applique également à des corps tubulaires séparables en un plus grand nombre de coquilles comme par exemple des corps séparables en trois coquilles ou plus ;
- bien qu'ici les coquilles soient pourvues de huit crénaux, ce nombre peut être modifié ;
- bien qu'ici les coquilles soient solidarisées l'une à l'autre par des glissières, l'invention s'applique également à d'autres moyens de solidarisation comme par exemple un assemblage par clippage, par vissage ou à l'aide d'un lien périphérique.
   huit crénaux, ce nombre peut être modifié ;
- bien qu'ici les coquilles soient solidarisées l'une à l'autre par des glissières, l'invention s'applique également à d'autres moyens de solidarisation comme par exemple un assemblage par clippage, par vissage ou à l'aide d'un lien périphérique.

## Revendications

1. Raccord d'extrémité (1) pour circuit de fibres optiques comportant au moins un tube (100) dans lequel s'étend un câble optique (200) selon un axe longitudinal (X), le raccord (1) comprenant un corps tubulaire (2) délimitant un canal (3) ayant un tronçon de réception (3.1) d'une portion d'extrémité (101) du tube (100) et une extrémité de sortie du câble optique (200), le tronçon de réception (3.1) étant pourvu de moyens d'accrochage (4) du tube (100) et d'un élément d'étanchéité (5) agencé pour assurer un contact étanche, d'une part, entre le câble optique (200) et une paroi d'un logement terminal (3.12) du tronçon de réception (3.1) et, d'autre part, entre le tube (100) et le corps tubulaire (2), **caractérisé en ce que** le corps tubulaire (2) est agencé pour pouvoir présenter au moins une ouverture longitudinale qui sépare le corps tubulaire (2) en une première coquille (2.1) et une deuxième coquille (2.2) afin de faire passer le câble optique (200) au travers de l'ouverture longitudinale pour l'amener dans le canal (3) et **en ce que** l'élément d'étanchéité (5) s'étend en hélice autour de l'axe longitudinal (X) pour pouvoir être monté sur le câble optique (200) sans qu'il soit nécessaire de débrancher une extrémité du câble (200), et **en ce que** les moyens d'accrochage (4) comprennent un filet hélicoïdal (4) présentant une arête vive (4.1) placée sur une face interne du tronçon de réception (3.1).

2. Raccord d'extrémité (1) selon la revendication 1, dans lequel l'élément d'étanchéité (5) a des spires d'extrémité (5.2, 5.4) disjointes.

3. Raccord d'extrémité (1) selon la revendication 1, dans lequel le logement terminal (3.12) comprend une portion tronconique (3.14).

4. Raccord d'extrémité (1) selon la revendication 1, dans lequel les spires d'extrémités (5.2, 5.4) de l'élément d'étanchéité (5) présentent une surface (4.6, 4.7) s'étendant dans un plan sensiblement perpendiculaire à l'axe longitudinal (X).

5. Raccord d'extrémité (1) selon la revendication 1, dans lequel l'élément d'étanchéité (5) a une petite section transversale (5.1) rectangulaire.

6. Raccord d'extrémité (1) selon la revendication 1, dans lequel la première et la deuxième coquille (2.1, 2.2) sont pourvues des moyens de leur solidarisation (2.31, 2.41) l'une à l'autre.

7. Raccord d'extrémité (1) selon la revendication 6, dans lequel les moyens de solidarisation comprennent au moins une glissière (2.31, 2.41).

8. Raccord d'extrémité (1) selon la revendication 7, dans lequel la glissière (2.31, 2.41) comprend au moins une butée (2.22, 2.23) limitant le déplacement selon l'axe longitudinal (X) de la première coquille (2.1) par rapport à la deuxième coquille (2.2).

9. Raccord d'extrémité (1) selon l'une quelconque des revendications précédentes, dans lequel le sens d'enroulement du filet hélicoïdal (4.1) est contraire au sens d'enroulement de l'élément d'étanchéité (5).

10. Procédé de connexion à un raccord d'extrémité (1) selon l'une quelconque des revendications précédentes d'un circuit de fibres optiques comportant au moins un tube (100) dans lequel s'étend un câble optique (200) selon un axe longitudinal (X), le raccord (1) comprenant un corps tubulaire (2) délimitant un canal ayant un tronçon de réception (3.1) d'une portion d'extrémité (101) du tube (100) et une extrémité de sortie du câble optique (200), le tronçon de réception (3.1) étant pourvu de moyens d'accrochage (4) du tube (100) et d'un élément d'étanchéité (5) agencé pour assurer un contact étanche, d'une part, entre le câble optique (200) et une paroi d'un logement terminal (3.12) du tronçon de réception (3.1) et, d'autre part, entre le tube (100) et le corps tubulaire (2), le corps tubulaire (2) étant agencé pour pouvoir présenter au moins une ouverture longitudinale qui sépare le corps tubulaire (2) en une première coquille (2.1) et une deuxième coquille (2.2) afin de faire passer le câble optique (200) au travers de l'ouverture longitudinale pour l'amener dans le canal (3) et l'élément d'étanchéité (5) s'étendant en hélice autour de l'axe longitudinal (X) pour pouvoir être monté sur le câble optique (200) sans qu'il soit nécessaire de débrancher une extrémité du câble (200), dans lequel les moyens d'accrochage (4) comprennent un filet hélicoïdal (4) présentant une arête vive (4.1) placée sur une face interne du tronçon de réception (3.1);
le procédé comprenant les étapes de :
- dérouler l'élément d'étanchéité (5) et l'enrouler sur une portion du câble optique (100) située face à une portion d'extrémité (101) du tube (100);
- monter le corps tubulaire (2) autour de la portion du câble optique (100) sur laquelle est enroulée l'élément d'étanchéité (5) en faisant passer le câble optique (200) par l'ouverture longitudinale ;
- introduire la portion d'extrémité (101) du tube (100) dans le tronçon de réception (3.1) jusqu'à déplacer l'élément d'étanchéité (3.5) dans le logement terminal (3.12),
- poursuivre l'introduction de la portion d'extrémité (101) du tube (100) jusqu'à comprimer axialement l'élément d'étanchéité (5) contre la paroi du logement terminal (-3.12).

11. Procédé selon la revendication 10, dans lequel l'introduction du tube (100) dans le corps tubulaire (2) se fait par vissage.

## Patentansprüche

1. Endkupplung (1) für eine Glasfaserschaltung, die mindestens ein Rohr (100) umfasst, in dem sich ein optisches Kabel (200) entlang einer Längsachse (X) erstreckt, wobei die Kupplung (1) einen röhrenförmigen Körper (2) umfasst, der einen Kanal (3) begrenzt, der einen Aufnahmeabschnitt (3.1) zur Aufnahme eines Endabschnitts (101) des Rohrs (100) und ein Austrittsende für das optische Kabel (200) umfasst, wobei der Aufnahmeabschnitt (3.1) mit Verankerungsmitteln (4) zum Verankern des Rohrs (100) und mit einem Dichtungselement (5) versehen ist, das ausgebildet ist, um einen dichten Kontakt einerseits zwischen dem optischen Kabel (200) und einer Wand einer Endaufnahme (3.12) des Aufnahmeabschnitts (3.1) und andererseits zwischen dem Rohr (100) und dem röhrenförmigen Körper (2) sicherzustellen, **dadurch gekennzeichnet, dass** der röhrenförmige Körper (2) ausgebildet ist, um mindestens eine Längsöffnung aufweisen zu können, die den röhrenförmigen Körper (2) in eine erste Schale (2.1) und eine zweite Schale (2.2) trennt, um das optische Kabel (200) durch die Längsöffnung durchtreten zulassen, um es in den Kanal (3) zu bringen, und dass sich das Dichtungselement (5) schraubenförmig um die Längsachse (X) erstreckt, um auf dem optischen Kabel (200) angebracht werden zu können, ohne dass es notwendig wäre, ein Endes des Kabels (200) zu entfernen, und dass die Verankerungsmittel (4) ein Schraubgewinde (4) umfassen, das eine scharfe Kante (4.1) aufweist, die auf einer Innenfläche des Aufnahmeabschnitts (3.1) platziert ist.

2. Endkupplung (1) nach Anspruch 1, bei der das Dichtungselement (5) getrennte Endwindungen (5.2, 5.4) hat.

3. Endkupplung (1) nach Anspruch 1, bei der die Endaufnahme (3.12) einen kegelstumpfförmigen Abschnitt (3.14) umfasst.

4. Endkupplung (1) nach Anspruch 1, bei der die Endwindungen (5.2, 5.4) des Dichtungselements (5) eine Oberfläche (4.6, 4.7) aufweisen, die sich in einer Ebene erstreckt, die im Wesentlichen senkrecht zur Längsachse (X) ist.

5. Endkupplung (1) nach Anspruch 1, bei der das Dichtungselement (5) einen kleinen rechteckigen Querschnitt (5.1) hat.

6. Endkupplung (1) nach Anspruch 1, bei der die erste und die zweite Schale (2.1, 2.2) mit Mitteln für ihre feste Verbindung (2.31, 2.41) aneinander versehen sind.

7. Endkupplung (1) nach Anspruch 6, bei der die Verbindungsmittel mindestens eine Gleitführung (2.31, 2.41) umfassen.

8. Endkupplung (1) nach Anspruch 7, bei der die Gleitführung (2.31, 2.41) mindestens einen Anschlag (2.22, 2.23) umfasst, der die Verschiebung der ersten Schale (2.1) in Bezug auf die zweite Schale (2.2) entlang der Längsachse (X) begrenzt.

9. Endkupplung (1) nach einem der vorhergehenden Ansprüche, bei der die Wicklungsrichtung des Schraubgewindes (4.1) entgegengesetzt zur Wicklungsrichtung des Dichtungselements (5) ist.

10. Verfahren zur Verbindung einer Glasfaserschaltung mit einer Endkupplung (1) nach einem der vorhergehenden Ansprüche, wobei die Glasfaserschaltung mindestens ein Rohr (100) umfasst, in dem sich ein optisches Kabel (200) entlang einer Längsachse (X) erstreckt, wobei die Kupplung (1) einen röhrenförmigen Körper (2) umfasst, der einen Kanal begrenzt, der einen Aufnahmeabschnitt (3.1) zur Aufnahme eines Endabschnitts (101) des Rohrs (100) und ein Austrittsende für das optische Kabel (200) hat, wobei der Aufnahmeabschnitt (3.1) mit Verankerungsmitteln (4) zur Verankerung des Rohrs (100) und mit einem Dichtungselement (5) versehen ist, das ausgebildet ist, um einen dichten Kontakt einerseits zwischen dem optischen Kabel (200) und einer Wand einer Endaufnahme (3.12) des Aufnahmeabschnitts (3.1) und andererseits zwischen dem Rohr (100) und dem röhrenförmigen Körper (2) sicherzustellen, wobei der röhrenförmige Körper (2) ausgebildet ist, um mindestens eine Längsöffnung aufweisen zu können, die den röhrenförmigen Körper (2) in eine erste Schale (2.1) und eine zweite Schale (2.2) trennt, um das optische Kabel (200) durch die Längsöffnung durchtreten zu lassen, um es in den Kanal (3) zu bringen, und wobei sich das Dichtungselement (5) schraubenförmig um die Längsachse (X) erstreckt, um auf dem optischen Kabel (200) angebracht werden zu können, ohne dass es notwendig wäre, ein Ende des Kabels (200) zu entfernen, wobei die Verankerungsmittel (4) ein Schraubgewinde (4) umfassen, das eine scharfe Kante (4.1) aufweist, die auf einer Innenfläche des Aufnahmeabschnitts (3.1) platziert ist;
wobei das Verfahren die Schritte umfasst:
- Abwickeln des Dichtungselements (5) und Aufwickeln desselben auf einen Abschnitt des optischen Kabels (100), der sich gegenüber einem Endabschnitt (101) des Rohres (100) befindet;
- Anbringen des röhrenförmigen Körpers (2) um den Abschnitt des optischen Kabels (100) herum, auf dem das Dichtungselement (5) aufgewickelt ist, indem man das optische Kabel (200) durch die Längsöffnung durchtreten lässt;
- Einbringen des Endabschnitts (101) des Rohres (100) in den Aufnahmeabschnitt (3.1) bis das Dichtungselement (3.5) in die Endaufnahme (3.12) verschoben ist,
- Fortsetzen des Einbringens des Endabschnittes (101) des Rohres (100) bis das Dichtungselement (5) axial gegen die Wand der Endaufnahme (3.12) gedrückt ist.

11. Verfahren nach Anspruch 10, bei dem das Einbringen des Rohres (100) in den röhrenförmigen Körper (2) durch Verschrauben erfolgt.

## Claims

1. End connector (1) for an optical fibre circuit including at least one tube (100) in which an optical cable (200) extends along a longitudinal axis (X), the connector (1) comprising a tubular body (2) delimiting a channel (3) having a section (3.1) for receiving an end portion (101) of the tube (100) and an exit end for the optical cable (200), the receiving section (3.1) being provided with means (4) for securing the tube (100) and a sealing element (5) adapted to ensure sealed contact, on the one hand, between the optical cable (200) and a wall of an end housing (3.12) of the receiving section (3.1) and, on the other hand, between the tube (100) and the tubular body (2), **characterized in that** the tubular body (2) is adapted to be able to include at least one longitudinal opening that separates the tubular body (2) into a first shell (2.1) and a second shell (2.2) in order to pass the optical cable (200) through the longitudinal opening to feed it into the channel (3) and **in that** the sealing element (5) extends helically around the longitudinal axis (X) to be able to be mounted on the optical cable (200) without it being necessary to unplug one end of the cable (200), and **in that** the securing means (4) comprise a helical thread (4) having a sharp edge (4.1) placed on an internal face of the receiving section (3.1).

2. End connector (1) according to Claim 1, in which the sealing element (5) has separated end turns (5.2, 5.4).

3. End connector (1) according to Claim 1, in which the end housing (3.12) comprises a frustoconical portion (3.14).

4. End connector (1) according to Claim 1, in which the end turns (5.2, 5.4) of the sealing element (5) have a surface (4.6, 4.7) extending in a plane substantially perpendicular to the longitudinal axis (X).

5. End connector (1) according to claim 1, wherein the sealing element (5) has a small rectangular cross-section (5.1) .

6. End connector (1) according to claim 1, in which the first and the second shell (2.1, 2.2) are provided with means (2.31, 2.41) for securing them to one another.

7. End connector (1) according to claim 6, in which the securing means comprise at least one slider (2.31, 2.41).

8. End connector (1) according to Claim 7, in which the slider (2.31, 2.41) comprises at least one stop (2.22, 2.23) limiting the movement along the longitudinal axis (X) of the first shell (2.1) relative to the second shell (2.2) .

9. End connector (1) according to any one of the preceding claims, in which the winding direction of the helical thread (4.1) is opposite the winding direction of the sealing element (5).

10. Method of connecting to an end connector (1) according to any one of the preceding claims of an optical fibre circuit including at least one tube (100) in which an optical cable (200) extends along a longitudinal axis (X), the connector (1) comprising a tubular body (2) delimiting a channel having a section (3.1) for receiving an end portion (101) of the tube (100) and an exit end for the optical cable (200), the receiving section (3.1) being provided with means (4) for securing the tube (100) and a sealing element (5) adapted to assure sealed contact, on the one hand, between the optical cable (200) and a wall of an end housing (3.12) of the receiving section (3.1) and, on the other hand, between the tube (100) and the tubular body (2), the tubular body (2) being adapted to be able to have at least one longitudinal opening that separates the tubular body (2) into a first shell (2.1) and a second shell (2.2) in order to pass the optical cable (200) through the longitudinal opening to feed it into the channel (3) and the sealing element (5) extending helically around the longitudinal axis (X) to be able to be mounted on the optical cable (200) without it being necessary to unplug one end of the cable (200), in which the securing means (4) comprise a helical thread (4) having a sharp edge (4.1) placed on an internal face of the receiving section (3.1) ;
the method comprising the steps of:
- unwinding the sealing element (5) and winding it on a portion of the optical cable (100) located opposite an end portion (101) of the tube (100);
- mounting the tubular body (2) around the portion of the optical cable (100) on which the sealing element (5) is wound by passing the optical cable (200) through the longitudinal opening;
- introducing the end portion (101) of the tube (100) into the receiving section (3.1) until the sealing element (3.5) is displaced in the end housing (3.12),
- continuing the introduction of the end portion (101) of the tube (100) until the sealing element (5) is axially compressed against the wall of the end housing (-3.12).

11. Method according to claim 10, in which the tube (100) is introduced into the tubular body (2) by screwing.
